# FASCICULE DE BREVET EUROPEEN

(11) **EP 3 016 813 B1**
(45) Date de publication et mention de la délivrance du brevet: **20.11.2019**
(21) Numéro de dépôt: 14749862.0
(22) Date de dépôt: 10.06.2014
(51) Int. Cl.: B60K 6/00, B60K 6/12, B60K 6/40, B60K 6/485, B60K 1/00, B60K 6/20, B60K 6/26, F02N 15/00, B62D 65/10, F02N 15/02

(54) **GROUPE MOTOPROPULSEUR POUR UN VÉHICULE HYBRIDE HYDRAULIQUE, COMPRENANT UNE MACHINE ÉLECTRIQUE**
ANTRIEBSEINHEIT FÜR EIN HYDRAULISCHES HYBRIDFAHRZEUG MIT EINER ELEKTRISCHEN MASCHINE
PROPULSION UNIT FOR A HYDRAULIC HYBRID VEHICLE, COMPRISING AN ELECTRIC MACHINE

(30) Priorité: 02.07.2013 FR 1356416
(43) Date de publication de la demande: 11.05.2016
(73) Titulaire: Technoboost, 75116 Paris (FR)
(72) Inventeur: FAGET, Sébastien, F-95220 Herblay (FR); GATEAU, Pascal, F-95620 Parmain (FR)
(74) Mandataire: Fernandez, Francis Lionel
(86) Numéro de dépôt international: PCT/FR2014/051376
(87) Numéro de publication internationale: WO 2015/001215

(56) Documents cités:
- EP-A2- 1 085 183
- EP-A2- 2 230 119
- WO-A1-02/092373
- DE-A1-102011 006 087
- US-A1- 2007 095 587

## Description

La présente invention concerne un groupe motopropulseur pour un véhicule hybride, ainsi qu'un procédé d'assemblage de ce groupe motopropulseur et un véhicule hybride comportant un tel groupe motopropulseur.

Un type de véhicule hybride connu, présenté notamment par le document FR-A1-2973302, comporte une transmission recevant la puissance d'un moteur thermique et d'une machine hydraulique, afin d'entraîner les roues motrices suivant différentes combinaisons. La transmission comporte de plus une pompe hydraulique qui peut recharger des accumulateurs de pression afin de stocker une énergie auxiliaire sous forme de pression hydraulique, pour la restituer ensuite à la machine hydraulique.

Le document DE102011006087 décrit un groupe motopropulseur pour un véhicule hybride hydraulique.

On obtient différents modes de fonctionnement comprenant notamment un mode avec une traction du véhicule uniquement par la machine hydraulique comportant le moteur thermique arrêté, sans émission de gaz polluants, un mode avec une traction du véhicule par la machine hydraulique et par le moteur thermique, et un mode avec le moteur thermique uniquement.

Par ailleurs d'une manière habituelle, le moteur thermique des véhicules automobiles entraîne en permanence un alternateur délivrant un courant électrique qui alimente le réseau de bord, et recharge la batterie de ce réseau. Cette alimentation permanente d'un courant électrique est nécessaire pour assurer notamment la sécurité du véhicule.

Afin de délivrer un courant de recharge pendant les arrêts du moteur thermique avec l'alternateur ne tournant plus, qui peuvent être relativement longs dans le cas où la quantité d'énergie auxiliaire stockée est importante, on peut redémarrer le moteur thermique pour entraîner l'alternateur et recharger la batterie du réseau de bord. Toutefois ces démarrages successifs du moteur thermique réduisent la performance énergétique du groupe motopropulseur.

On peut aussi de manière connue utiliser une technologie comprenant des capacités électriques élevées, appelées « super-capacités », reliées au réseau de bord par un convertisseur de courant, afin d'obtenir une réserve plus importante d'énergie électrique capable d'alimenter ce réseau pendant les arrêts du moteur thermique les plus longs.

Cependant ces capacités ainsi que le convertisseur comportent un volume et une masse relativement importants, ainsi que des coûts élevés. De plus, il faut prévoir des câbles électriques disposant d'une section suffisante pour passer les fortes puissances alimentant les super-capacités, ce qui pose des problèmes de raccordement du faisceau électrique.

La présente invention a notamment pour but d'éviter ces inconvénients de la technique antérieure.

Elle propose à cet effet un groupe motopropulseur pour un véhicule hybride hydraulique conforme à la revendication 1.

Un avantage de ce groupe motopropulseur et qu'en utilisant une transmission pouvant entraîner en permanence la machine électrique quand le véhicule roule avec le moteur thermique arrêté, afin d'alimenter le réseau de bord, on peut se passer de moyens de stockage d'énergie électrique complémentaires comme des super-capacités.

De plus en prévoyant une machine électrique qui peut entraîner par la transmission le moteur thermique pour le démarrer, on libère l'emplacement prévu habituellement pour le démarreur électrique sur le côté de ce moteur, ce qui permet de disposer la machine électrique à cet emplacement afin de réaliser un groupe motopropulseur compact comprenant des volumes qui diffèrent peu d'un groupe motopropulseur d'un véhicule conventionnel.

Le groupe motopropulseur selon l'invention peut de plus comporter une ou plusieurs des caractéristiques suivantes, qui peuvent être combinées entre elles.

Avantageusement, un réducteur de vitesse est disposé entre l'arbre de la machine électrique et l'arbre de liaison.

En particulier, l'arbre de la machine électrique et l'arbre de liaison peuvent être latéralement décalés.

Selon un mode de réalisation, l'arbre de la machine électrique et l'arbre de liaison sont reliés entre eux par des pignons.

Selon un autre mode de réalisation, l'arbre de la machine électrique et l'arbre de liaison sont reliés entre eux par une courroie.

Avantageusement, le moteur thermique comportant sur un côté de son carter parallèlement à l'axe, un emplacement prévu pour recevoir habituellement un démarreur électrique, la machine électrique est disposée à la place de ce démarreur.

L'invention a de plus pour objet un véhicule automobile hybride hydraulique disposant d'un groupe motopropulseur de traction comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 présente un moteur recevant sur le côté une machine électrique entraînée par un réducteur, pour un groupe motopropulseur selon l'invention ;
- la figure 2 présente en variante un moteur recevant sur le côté une machine électrique entraînée par un autre type de réducteur.

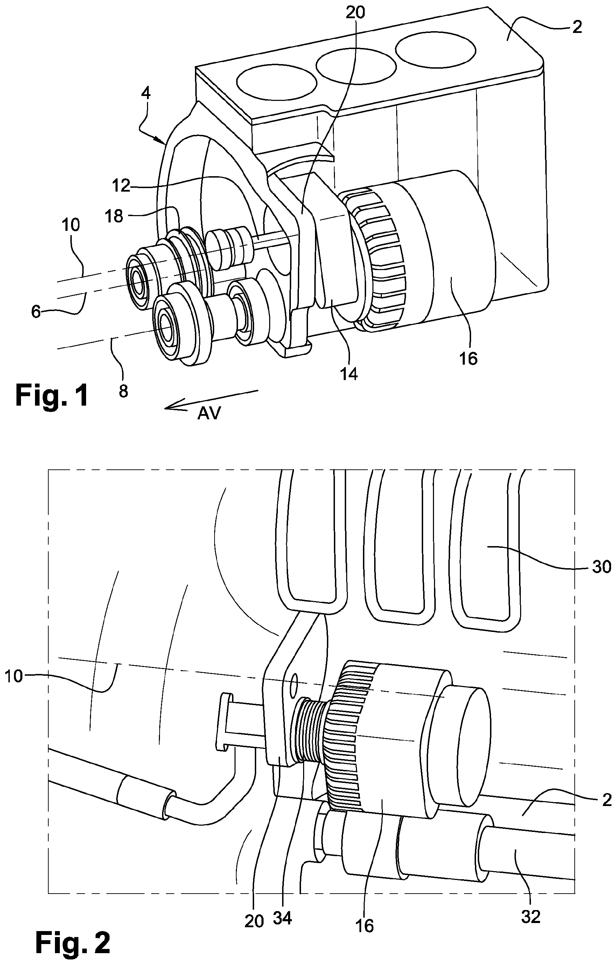

La figure 1 présente un carter moteur 2 comportant trois cylindres verticaux, comprenant une face transversale 4 située sur le côté appelé par convention côté avant, indiqué par une flèche notée « AV », destinée à recevoir l'appui d'une transmission entraînant les roues motrices d'un véhicule hybride hydraulique.

Le moteur ainsi que la transmission sont disposés transversalement dans le véhicule, entre les roues avant afin de les entraîner.

La transmission reçoit une puissance mécanique venant du vilebrequin du moteur thermique, et d'une machine hydraulique non représentée, pour entraîner les roues motrices par une combinaison de ces puissances suivant le mode de fonctionnement demandé. Suivant le mode de fonctionnement la transmission peut entraîner une pompe hydraulique de recharge d'accumulateurs de pression, qui délivrent ensuite cette pression à la machine hydraulique.

La transmission comporte différents arbres parallèles, comprenant notamment un arbre disposé suivant un axe 6 supportant deux pignons engagés par un manchon de synchronisation 18 coulissant axialement entre eux. Le pignon avant engrène avec un pignon disposé suivant un premier axe parallèle 8, le pignon arrière engrenant avec un pignon porté par un arbre de liaison 12, disposé suivant un deuxième axe parallèle 10.

Le carter moteur 2 comporte une paroi transversale 20 sur le côté du moteur tourné vers l'arrière du véhicule, qui prolonge la face avant transversale recevant la transmission. Le carter moteur 2 est prévu pour recevoir habituellement de ce côté un démarreur électrique comprenant un axe parallèle au vilebrequin, disposant vers l'avant d'un nez comportant un pignon dépassant vers l'avant de la paroi transversale 20, qui s'engage sur une couronne montée sur le volant moteur fixé à l'extrémité avant du vilebrequin.

Une machine électrique 16 installée à la place de ce démarreur, comporte un arbre disposé parallèlement au vilebrequin, dont l'extrémité avant entre dans un réducteur de vitesse 14 fixé sur la face arrière de la paroi transversale 20. La sortie du réducteur entraîne l'extrémité arrière de l'arbre de liaison 12, cet arbre traversant la cloison transversale 20 pour rentrer dans la transmission.

Le réducteur de vitesse 14 comporte deux carters disposés suivant un plan transversal, formant un volume intérieur étanche recevant des engrenages qui relient l'arbre de la machine électrique 16, à l'arbre de liaison 12 de la transmission.

De cette manière le réducteur de vitesse 14 permet à la fois de choisir le rapport de démultiplication entre l'arbre de la machine électrique 14 et l'arbre de liaison 12, et de gérer le décalage latéral entre ces deux axes. En particulier on peut ajuster la vitesse de la machine électrique 16 pour obtenir le meilleur rendement de cette machine.

La machine électrique 16 est entraînée par le différentiel relié aux roues motrices du véhicule, ce qui permet de générer un courant électrique de recharge de la batterie du réseau de bord quand le véhicule roule, même si le moteur thermique est à l'arrêt.

Ce courant électrique qui peut être généré en permanence, permet d'éviter notamment l'installation de moyens de stockage d'énergie complémentaires comme des super-capacités disposant d'un convertisseur, qui sont encombrants et onéreux. De plus on évite un raccordement par un faisceau électrique d'une certaine puissance, vers ces moyens de stockage qui peuvent être disposés en particulier dans la façade avant du véhicule.

A l'inverse, la machine électrique 16 peut délivrer un couple sur les roues motrices en prélevant une énergie électrique dans des batteries, afin d'ajouter ce couple à celui délivré par la machine hydraulique. On peut ainsi délivrer un couple complémentaire notamment pour les démarrages du véhicule en marche avant ou en marche arrière.

Le couple de la machine électrique 16 peut aussi s'ajouter à celui fourni par le moteur thermique, afin d'obtenir notamment des puissances élevées permettant des fortes accélérations.

Suivant la disposition de la transmission, la machine électrique 16 peut servir de démarreur pour le moteur thermique, en particulier en délivrant un couple élevé pour les démarrages à froid.

Pour l'assemblage du groupe motopropulseur, avantageusement on accouple la machine électrique 16 avec son réducteur 14 afin de former un sous-ensemble qui est fixé sur le moteur thermique. La transmission est ensuite approchée axialement de l'ensemble comprenant le moteur thermique et sa machine électrique 16, pour la fixer dessus. Le groupe motopropulseur ainsi formé est ensuite installé dans la caisse du véhicule sur les lignes d'assemblage de ce véhicule.

La figure 2 présente la machine électrique 16 se trouvant au-dessus d'un arbre de roue 32, qui longe le carter du moteur 2 pour relier le différentiel de sortie intégré dans la transmission se trouvant sur le côté gauche du véhicule, à la roue se trouvant de l'autre côté. La machine électrique 16 se trouve aussi en dessous des collecteurs d'admission 30, disposés sur le carter moteur 2 pour alimenter la culasse.

L'extrémité avant de l'arbre de la machine électrique 16 comporte une poulie 34 à plusieurs crans, recevant une courroie entraînant une deuxième poulie non représentée, qui se trouve à l'extrémité arrière de l'arbre de liaison disposé suivant l'axe 10.

On réalise ainsi un réducteur de vitesse par la courroie et les poulies, qui permet d'ajuster la vitesse de rotation de la machine électrique 16, et de gérer le décalage latéral entre l'axe de cette machine et celui de l'arbre de liaison 12.

## Revendications

1. Groupe motopropulseur pour un véhicule hybride hydraulique, comprenant une transmission recevant la puissance d'un moteur thermique et d'une deuxième motorisation alimentée par une énergie hydraulique, pour entraîner les roues du véhicule, **caractérisé en ce que** le moteur thermique ne comportant pas de démarreur électrique spécifique prévu pour l'entraîner directement, reçoit sur un côté de son carter (2) parallèlement à l'axe, une machine électrique reliée à un arbre de liaison (12) qui rentre dans la transmission et **en ce que** le carter moteur (2) dispose sur un côté d'une paroi transversale (20) recevant du côté arrière la machine électrique (16), cette paroi étant traversée par l'arbre de liaison (12).

2. Groupe motopropulseur selon la revendication 1, **caractérisé en ce qu'**un réducteur de vitesse (14) est disposé entre l'arbre de la machine électrique (16) et l'arbre de liaison (12).

3. Groupe motopropulseur selon la revendication 1 ou 2, **caractérisé en ce que** l'arbre de la machine électrique (16) et l'arbre de liaison (12) sont latéralement décalés.

4. Groupe motopropulseur selon la revendication 2 ou 3, **caractérisé en ce que** l'arbre de la machine électrique (16) et l'arbre de liaison (12) sont reliés entre eux par des pignons.

5. Groupe motopropulseur selon la revendication 2 ou 3, **caractérisé en ce que** l'arbre de la machine électrique (16) et l'arbre de liaison (12) sont reliés entre eux par une courroie.

6. Groupe motopropulseur selon l'une quelconque des revendications précédentes, **caractérisé en ce que** le moteur thermique comportant sur un côté de son carter (2) parallèlement à l'axe, un emplacement prévu pour recevoir habituellement un démarreur électrique, la machine électrique (16) est disposée à la place de ce démarreur.

7. Véhicule automobile hybride hydraulique disposant d'un groupe motopropulseur de traction, **caractérisé en ce que** ce groupe motopropulseur est réalisé selon l'une quelconque des revendications 1 à 6.

## Patentansprüche

1. Antriebseinheit für ein hydraulisches Hybridfahrzeug, die ein Getriebe umfasst, das die Leistung von einer Brennkraftmaschine erhält, und eine zweite Motorisierung, die von einer hydraulischen Energie versorgt wird, um die Räder des Fahrzeugs anzutreiben, **dadurch gekennzeichnet, dass** die Brennkraftmaschine keinen spezifischen elektrischen Anlasser umfasst, der vorgesehen ist, um sie direkt anzutreiben, auf einer Seite ihres Gehäuses (2) parallel zu der Achse eine elektrische Maschine erhält, die mit einer Verbindungswelle (12) verbunden ist, die in das Getriebe eindringt, und dass das Motorgehäuse (2) auf einer Seite über eine Querwand (20) verfügt, die auf der Rückseite die elektrische Maschine (16) erhält, wobei diese Wand von der Verbindungswelle (12) durchquert ist.

2. Antriebseinheit nach Anspruch 1, **dadurch gekennzeichnet, dass** ein Drehzahlminderer (14) zwischen der Welle der elektrischen Maschine (16) und der Verbindungswelle (12) angeordnet ist.

3. Antriebseinheit nach Anspruch 1 oder 2, **dadurch gekennzeichnet, dass** die Welle der elektrischen Maschine (16) und die Verbindungswelle (12) seitlich versetzt sind.

4. Antriebseinheit nach Anspruch 2 oder 3, **dadurch gekennzeichnet, dass** die Welle der elektrischen Maschine (16) und die Verbindungswelle (12) miteinander durch Ritzel verbunden sind.

5. Antriebseinheit nach Anspruch 2 oder 3, **dadurch gekennzeichnet, dass** die Welle der elektrischen Maschine (16) und die Verbindungswelle (12) miteinander durch einen Riemen verbunden sind.

6. Antriebseinheit nach einem der vorstehenden Ansprüche, **dadurch gekennzeichnet, dass** die Brennkraftmaschine auf einer Seite ihres Gehäuses (2) parallel zu der Achse eine Stelle umfasst, die vorgesehen ist, um gewöhnlich einen elektrischen Anlasser zu erhalten, wobei die elektrische Maschine (16) an der Stelle dieses Anlassers angeordnet ist.

7. Hydraulisches Hybridkraftfahrzeug, das über eine Traktionsantriebseinheit verfügt, **dadurch gekennzeichnet, dass** die Antriebseinheit nach einem der Ansprüche 1 bis 6 hergestellt ist.

## Claims

1. A propulsion unit for a hydraulic hybrid vehicle, including a transmission receiving power from a heat engine and from a second motorization powered by a hydraulic energy, for driving the wheels of the vehicle, **characterized in that** the heat engine, not comprising a specific electric starter provided for driving it directly, receives on a side of its case (2) parallel to the axis, an electric machine connected to a connecting shaft (12) which goes into the transmission and **in that** the crankcase (2) has on one side a transverse wall (20) receiving from the rear side the electric machine (16), this wall being passed through by the connecting shaft (12).

2. The propulsion unit according to Claim 1, **characterized in that** a speed reducer (14) is arranged between the shaft of the electric machine (16) and the connecting shaft (12).

3. The propulsion unit according to Claim 1 or 2, **characterized in that** the shaft of the electric machine (16) and the connecting shaft (12) are offset laterally.

4. The propulsion unit according to Claim 2 or 3, **characterized in that** the shaft of the electric machine (16) and the connecting shaft (12) are connected with one another by pinions.

5. The propulsion unit according to Claim 2 or 3, **characterized in that** the shaft of the electric machine (16) and the connecting shaft (12) are connected with one another by a belt.

6. The propulsion unit according to any one of the preceding claims, **characterized in that** the heat engine, comprising on a side of its case (2) parallel to the axis, a location provided for usually receiving an electric starter, the electric machine (16) is arranged in the place of this starter.

7. A hydraulic hybrid motor vehicle having a traction propulsion unit, **characterized in that** this propulsion unit is realized according to any one of Claims 1 to 6.
